# EUROPÄISCHE PATENTSCHRIFT

(11) **EP 2 600 037 B1**
(45) Veröffentlichungstag und Bekanntmachung des Hinweises auf die Patenterteilung: **25.06.2014**
(21) Anmeldenummer: 11191335.6
(22) Anmeldetag: 30.11.2011
(51) Int. Cl.: F16H 57/04, F03D 11/00

(54) **Getriebe für industrielle Anwendungen oder Windkraftanlagen**
Gear for industrial applications or wind energy turbines
Engrenage pour applications industrielles ou éoliennes

(43) Veröffentlichungstag der Anmeldung: 05.06.2013
(73) Patentinhaber: Siemens Aktiengesellschaft, 80333 München (DE)
(72) Erfinder: Reimers, Jan-Dirk, 52074 Aachen (DE); Weinsdörfer, Ulrich, 52064 Aachen (DE); Barthel, Thomas, 46562 Voerde (DE); Tebroke, Jörg, 46414 Rhede (DE)

(56) Entgegenhaltungen:
- EP-A2- 0 895 002
- DE-A1- 4 132 780
- US-A1- 2011 150 655
- US-A1- 2011 168 495

## Beschreibung

In Getrieben für industrielle Anwendungen oder Windkraftanlagen ist unter allen Betriebsbedingungen eine ausreichende Schmierstoffversorgung an Gleit- oder Wälzkontakten von Lagern, Wellen, Bolzen, Lauf- oder Steckverzahnungen sicherzustellen. Insbesondere bei Dauerbetrieb oder hohen Lastwechselzahlen unterliegen Getriebe erheblichen Ermüdungsbelastungen in Form von Überrollungen oder Überwälzungen. Daher bedürfen Maschinenelemente wie Verzahnungen und Lager einer wirksamen und effizienten Schmierung, um Beschädigungen oder vorzeitigen Verschleiß zu vermeiden. Auch für eine Wärmeabfuhr von tribologisch beanspruchten Maschinenelementen ist eine zuverlässige Schmierstoffversorgung äußerst wichtig.

Aus DE 10 2009 017 521 B4 ist ein Getriebe einer Windenergieanlage beschrieben, bei dem eine Ablaufleitung für Öl aus einem Ölsumpf eine im Ölsumpf angeordnete Einlauföffnung aufweist. Die Einlauföffnung der Ablaufleitung ist unterhalb eines minimalen Ölfüllstandniveaus des Ölsumpfes angeordnet. Oberhalb der Einlauföffnung ist in der Ablaufleitung eine vom Öl des Ölsumpfes durchfließbare oder durchströmbare Durchbrechung vorgesehen. Auf diese Weise fällt das Ölfüllstandsniveau auch während eines Stillstands der Windenergieanlage nicht unter das minimale Ölfüllstandsniveau.

In WO 2009/112093 A2 ist eine Windenergieanlage bekannt, deren Getriebe eine Schmiermittelpumpe zur Druck- oder Zwangsschmierung von Verschleiß unterliegenden Bauteilen umfaßt. Zur Schmiermittelversorgung in einem Trudelbetrieb oder bei Netzausfall ist eine zuschaltbare, durch einen Rotor der Windenergieanlage antreibbare Notlaufpumpe vorgesehen, die in einem Normalbetrieb der Windenergieanlage außer Funktion gesetzt ist.

Aus DE 10 2007 029 469 A1 ist ein Windenergieanlagengetriebe bekannt, das eine erste Ölfördereinrichtung zur Ölförderung aus einem Ölsumpf umfaßt. Über eine Ölverteilungseinrichtung wird Öl an zu versorgende Getriebeteile weitergeleitet. Das Windenergieanlagengetriebe umfaßt zumindest eine Stirnradstufe mit zwei miteinander kämmenden Stirnzahnrädern, welche eine Zahnradpumpe als zweite Ölfördereinrichtung bilden.

In DE 10 2005 005 154 A1 ist ein Fahrzeuggetriebe mit Trokkensumpfschmierung beschrieben, bei dem ein unterer Getriebegehäusebereich teilweise mit Getriebeöl gefüllt ist. Für eine Schmierölversorgung von Getriebekomponenten während eines Fahrzeugbetriebs ist eine Ölfördereinrichtung vorgesehen, die während des Fahrzeugbetriebs Getriebeöl aus dem unteren Getriebegehäusebereich in ein Getriebeölreservoir und zu Schmiereinrichtungen fördert. Ist der Fahrzeugbetrieb beendet, gelangt Getriebeöl über einen Fluidweg, der das Getriebeölreservoir mit dem unteren Getriebegehäusebereich verbindet, aus dem Getriebeölreservoir zurück in den unteren Getriebegehäusebereich. Damit ist sichergestellt, daß zumindest einige Getriebezahnräder in Getriebeöl eingetaucht sind, wenn der Fahrzeugbetrieb beendet ist. Während des Fahrzeugbetriebs sinkt das Getriebeöl im unteren Getriebegehäusebereich stets auf einen Pegel ab, bei dem kein Getriebezahnrad in Getriebeöl eingetaucht ist.

Aus DE 37 02 008 A1 ist ein Verfahren zur Schmierung eines Getriebes für Windenergieanlagen bekannt, bei dem eine Betriebsschmierung von einer Ölumlaufanlage mit Einspritzschmierung aufrechterhalten und gleichzeitig Öl in der Umlaufanlage gekühlt wird. Bei Unterschreitung einer einstellbaren Drehzahl wird ein Ölstand im Getriebe auf eine für eine Tauchschmierung notwendige Höhe gebracht, indem eine dazu erforderliche Ölmenge in das Getriebe gegeben wird.

Mechanisch angetriebene Schmiermittelpumpen für Getriebe sind hinsichtlich ihrer Übersetzung üblicherweise derart ausgelegt, daß erst ab einer bestimmten Drehzahl des Getriebes eine nennenswerte Menge Schmiermittel gefördert wird. Ermöglichen Schmiermittelpumpen dagegen bereits bei geringen Drehzahlen ein zufriedenstellendes Fördervolumen, sind sie in einem Nennleistungsbereich des Getriebes extrem stark belastet und für einen unteren Drehzahlbereich deutlich überdimensioniert. Zudem lassen sich mechanische Schmiermittelpumpen aufgrund ihres Platzbedarfs vielfach nicht in Getrieben mit kompakter Bauweise unterbringen.

US 2011 150 655 A1 (Vestas Wind Systems), die ein Getriebe nach dem Oberbegriff des Anspruchs 1 offenbart, beschreibt ein Schmiersystem eines Getriebesystems einer Windturbine, wobei das Schmiersystem
- einen zum Aufnehmen von Schmiermittel eingerichteten ersten Behälter,
- einen zum Aufnehmen von Schmiermittel eingerichteten zweiten Behälter,
- ein Pumpmittel, das während des normalen Betriebs dazu eingerichtet ist, Schmiermittel von dem ersten Behälter dem zweiten Behälter zuzuführen,
- ein Verteilersystem in Fluidverbindung zwischen dem ersten Behälter und dem Getriebesystem, so dass das Schmiermittel während des normalen Betriebs von dem ersten Behälter über das Verteilersystem dem Getriebesystem zuführbar ist, und
- ein Ventilmittel aufweist, das zwischen einer ersten Stellung, in der ein Strömen des Schmiermittels direkt von dem zweiten Behälter zu dem Getriebesystem oder zu dem ersten Behälter verhindert ist, und einer zweiten Stellung verschiebbar ist, in der ein derartiges Strömen des Schmiermittels gestattet ist,
wobei das Ventilmittel in Reaktion auf Druckveränderungen in dem Schmiersystem derart tätig ist, dass eine vorbestimmte Druckveränderung automatisch und direkt bewirkt, dass sich die Ventilmittel von der ersten Stellung in die zweite Stellung verschieben, und wobei der erste Behälter gleichzeitig mit dem Verteilersystem und dem zweiten Behälter über parallele Strömungswege in Fluidverbindung ist, wenn das Ventilmittel in der ersten Stellung ist.

US 2011 168 495 A1 (General Electric) beschreibt ein Schmiersystem für ein Fluidturbinengetriebe, wobei das Schmiersystem aufweist: Ein Vorratssubsystem, um Öl mittels eines Ölbehälters oder eines Hydraulikspeichers an ein Getriebe einer Fluidturbine zur Schmierung während wenigstens einem Zustand von Leerlauf oder Ausfall des elektrischen Netzes zu liefern; gekennzeichnet durch wenigstens ein normalerweise offenes Steuerventil, um den Strom von Öl aus dem Versorgungssubsystem zu dem Getriebe bei Fehlen von dem wenigstens einen Steuerventil zugeführter Elektrizität zu ermöglichen; und ein Steuersubsystem, um Elektrizität an das wenigstens eine Steuerventil zu liefern, um das wenigstens eine Steuerventil in einer geschlossenen Position halten, wenn kein Leerlauf oder Ausfall de elektrischen Netzes vorliegt.

Der vorliegenden Erfindung liegt die Aufgabe zugrunde, ein Getriebe für industrielle Anwendungen oder Windkraftanlagen mit einem Schmierstoffversorgungssystem zu schaffen, das in sämtlichen Betriebszuständen eines das Getriebe umfassenden Antriebssystems, insbesondere bei plötzlichem Energieversorgungsausfall oder in einem Trudelbetrieb, eine zuverlässige Schmierstoffversorgung ermöglicht und einen reduzierten Energiebedarf aufweist.

Diese Aufgabe wird erfindungsgemäß durch ein Getriebe mit den in Anspruch 1 angegebenen Merkmalen gelöst. Vorteilhafte Weiterbildungen der vorliegenden Erfindung sind in den abhängigen Ansprüchen angegeben.

Das erfindungsgemäße Getriebe umfaßt eine Antriebswelle und eine Abtriebswelle, die in einem Getriebegehäuse gelagert sind und jeweils durch eine Gehäuseöffnung treten, sowie zumindest ein mit der Antriebswelle verbundenes Zahnrad und zumindest ein mit der Abtriebswelle verbundenes Zahnrad, die mittelbar oder unmittelbar im Eingriff miteinander stehen. Außerdem ist ein Schmierstofftank vorgesehen, der einerseits mit einem Ablauf einer an einem Gehäuseboden gebildeten Schmierstoffauffangwanne und andererseits mit zumindest einem Schmierstoffzuführungspunkt für ein Lager bzw. ein Zahnrad verbunden ist. Zusätzlich ist ein Schmierstoffausgleichsbehälter vorgesehen, der einerseits mit dem Schmierstofftank und andererseits mit dem zumindest einen Schmierstoffzuführungspunkt schmierstoffdruck- bzw. temperaturabhängig verbunden ist. Hierzu kann der Schmierstoffausgleichsbehälter beispielsweise mittels eines Anschlusses, der eine feder- oder stickstoffbelastete Membran umfaßt, mit dem Schmierstofftank und dem zumindest einen Schmierstoffzuführungspunkt verbunden sein. Alternativ dazu kann der Schmierstoffausgleichsbehälter mittels eines Anschlusses, der eine passive Drossel umfaßt, mit dem Schmierstofftank und mit dem zumindest einen Schmierstoffzuführungspunkt verbunden sein.

Des weiteren umfaßt das erfindungsgemäße Getriebe eine Schmierstoffpumpe, die an einen die Schmierstoffauffangwanne, den Schmierstofftank, den Schmierstoffausgleichsbehälter und den zumindest einen Schmierstoffzuführungspunkt umfassenden Schmierstoffkreislauf angeschlossen ist. Der Schmierstoffpumpe ist darüber hinaus eine Regelungseinheit zur Füllstandsregelung in der Schmierstoffauffangwanne zumindest auf ein Trockensumpfniveau für einen Normalbetrieb und auf ein Tauchschmierungsniveau für einen Not- oder Trudelbetrieb bei ausgeschalteter Schmierstoffpumpe zugeordnet. Dabei ist die Schmierstoffpumpe im Not- oder Trudelbetrieb ausgeschaltet. Somit weist das erfindungsgemäße Getriebe ein hinsichtlich seines Energiebedarfs optimiertes Schmierstoffversorgungssystem auf. Durch Sicherstellung eines Tauchschmierungsniveaus in der Schmierstoffauffangwanne im Not- oder Trudelbetrieb ist eine stets zuverlässige Schmierstoffversorgung gewährleistet, insbesondere auch bei plötzlichem Energieversorgungsausfall. Das Trockensumpfniveau in der Schmierstoffauffangwanne ist vorzugsweise unterhalb sämtlicher Zahnräder des erfindungsgemäßen Getriebes.

Entsprechend einer bevorzugten Ausgestaltung der vorliegenden Erfindung erfolgt die Füllstandsregelung in der Schmierstoffauffangwanne ausschließlich durch eine Förderleistungsregelung der Schmierstoffpumpe. Dies ermöglicht eine besonders einfache Realisierung eines erfindungsgemäßen Getriebes auf Basis bestehender Konstruktionen. Wenn die Schmierstoffpumpe im Normalbetrieb beispielsweise auf volle Förderleistung eingestellt ist, kann die Regelungseinheit zur Füllstandsregelung besonders einfach realisiert werden.

Bei Not- oder Trudelbetrieb ist vorteilhafterweise zumindest ein Zahnrad zumindest teilweise in Schmierstoff in der Schmierstoffauffangwanne eingetaucht. Darüber hinaus kann im Not- oder Trudelbetrieb zur Schmierstoffversorgung zumindest eines oberhalb der Schmierstoffauffangwanne angeordneten Lagers bzw. Zahnrads zumindest ein Schmierstoffauffangbehälter für durch zumindest ein umlaufendes Getriebeteil aus der Schmierstoffauffangwanne aufgenommenen Schmierstoff vorgesehen sein. Entsprechend einer vorteilhaften Weiterbildung der vorliegenden Erfindung ist der Schmierstoffauffangbehälter über eine Rohrverbindung bzw. einen in das Getriebegehäuse integrierten Schmierstoffversorgungskanal mit einem Schmierstoffzuführungspunkt für das oberhalb der Schmierstoffauffangwanne angeordnete Lager bzw. Zahnrad verbunden. Auf diese Weise können im Not- oder Trudelbetrieb auch über Tauchschmierungsniveau angeordnete Lager und Zahnräder stets zuverlässig mit Schmierstoff versorgt werden.

Entsprechend der vorliegenden Erfindung ist für die Füllstandsregelung in der Schmierstoffauffangwanne in einem Teillastbetrieb ein Tauchschmierungsniveau vorgegeben. Zusätzlich ist die Schmierstoffpumpe im Teillastbetrieb auf eine reduzierte Förderleistung für einen Schmierstofftransport zum zumindest einen Schmierstoffzuführungspunkt eingestellt ist. Dies ermöglicht eine weitere Reduzierung des Energiebedarfs für das Schmierstoffversorgungssystem des erfindungsgemäßen Getriebes.

Vorzugsweise ist der Schmierstoffausgleichsbehälter im Teillastbetrieb vom Schmierstofftank und vom zumindest einen Schmierstoffzuführungspunkt mittels eines Stellgliedes oder passiven Schaltelements getrennt. Damit kann auf einfache Weise ein Tauchschmierungsniveau in der Schmierstoffauffangwanne während des Teillastbetriebs realisiert werden. Entsprechend einer weiteren Ausgestaltung der vorliegenden Erfindung weist der Schmierstoffausgleichsbehälter ein Volumen auf, das einer Schmierstoffmenge in der Schmierstoffauffangwanne zur Tauchschmierung entspricht. Darüber hinaus ist die Regelungseinheit zur Füllstandsregelung vorzugsweise derart ausgestaltet, daß ein Umschalten vom Not- oder Trudelbetrieb in den Teillastbetrieb schmierstofftemperatur- bzw. -viskositätsabhängig erfolgt. Damit kann sichergestellt werden, daß nur ausreichend temperierter bzw. fließfähiger Schmierstoff zur Druck- bzw. Zwangsschmierung während des Teillast- oder Normalbetriebs verwendet wird. Alternativ oder zusätzlich kann hierzu im Schmierstoffausgleichsbehälter bzw. im Schmierstofftank ein Wärmetauscher bzw. ein Heizelement angeordnet sein.

Die vorliegende Erfindung wird nachfolgend an einem Ausführungsbeispiel anhand der Zeichnung näher erläutert. Es zeigt
- Figur 1: eine schematische Darstellung eines erfindungsgemäβen Getriebes in einem Normalbetrieb,
- Figur 2: eine schematische Darstellung des Getriebes gemäß Figur 1 in einem Teillastbetrieb,
- Figur 3: eine schematische Darstellung des Getriebes gemäß Figur 1 in einem Not- oder Trudelbetrieb,
- Figur 4: eine Schnittdarstellung des Getriebes gemäß Figur 1 mit zwei stirnseitig an einem Stirnrad angeordneten Schmierstoffauffangbehältern,
- Figur 5: eine Seitenansicht eines Schmierstoffauffangbehälters gemäß Figur 4.

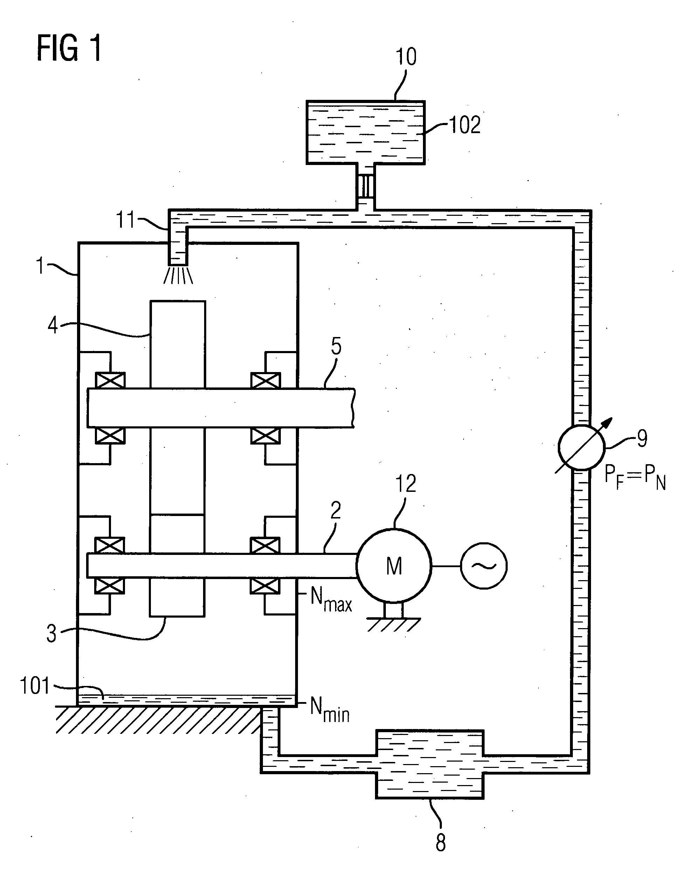

Das in Figur 1 dargestellte Getriebe weist zwei von einem Getriebegehäuse 1 umfaßte Stirnräder 3-4 auf, die miteinander in Eingriff stehen. Durch jeweils eine Öffnung am Getriebegehäuse 1 treten eine Antriebswelle 2 und eine Abtriebswelle 5, die im Getriebegehäuse 1 gelagert sind. Ein antriebsseitiges Stirnrad 3 ist mit der Antriebswelle 2 drehfest verbunden, während die Abtriebswelle 5 mit einem abtriebsseitigen Stirnrad 4 drehfest verbunden ist. Die Antriebswelle 2 ist über eine Kupplung mit einem elektrischen Motor 12 verbunden. Nachfolgende Ausführungen gelten unbeschadet dessen in gleicher Weise für Anwendungsfälle, in denen ein Getriebe mit einem Generator verbunden ist, beispielsweise in einer Windkraftanlage.

Außerhalb des Getriebegehäuses 1 ist im vorliegenden Ausführungsbeispiel ein Schmierstofftank 8 angeordnet, der einerseits mit einem Ablauf einer an einem Gehäuseboden gebildeten Schmierstoffauffangwanne und andererseits mit zumindest einem Schmierstoffzuführungspunkt 11 für das abtriebsseitige Stirnrad 4 verbunden ist. Zur Druck- bzw. Zwangsschmierung ist am Schmierstoffzuführungspunkt 11 zumindest eine Spritzdüse vorgesehen. Zusätzlich zum Schmierstofftank 8 ist ein Schmierstoffausgleichsbehälter 10 vorgesehen, der an eine Rohrverbindung zwischen dem Schmierstofftank 8 und dem Schmierstoffzuführungspunkt 11 schmierstoffdruck- bzw. temperaturabhängig verbunden ist. Der Schmierstoffausgleichsbehälter 10 kann mittels eines Anschlusses, der eine feder- oder stickstoffbelastete Membran umfaßt, an die Rohrverbindung zwischen dem Schmierstofftank 8 und dem Schmierstoffzuführungspunkt 11 angebunden werden. Alternativ dazu kann der Schmierstoffausgleichsbehälter 10 mittels eines Anschlusses, der eine passive Drossel umfaßt, mit der Rohrverbindung zwischen dem Schmierstofftank 8 und dem Schmierstoffzuführungspunkt 11 verbunden werden. Mit der Membran bzw. der passiven Drossel ist der Schmierstoffausgleichsbehälter 10 in einem Normalbetrieb mit Schmierstoff gefüllt und in einem Not- oder Trudelbetrieb entleert, je auch Anwendungserfordernissen auch zeitverzögert. Ein Entleeren des Schmierstoffausgleichsbehälters 10 führt dazu, daß Schmierstoff in die Schmierstoffauffangwanne zurückfließt und dort ein Tauchschmierungsniveau erreicht, und zwar ohne, daß hierzu Hilfsenergie, ein Ventil, eine Pumpe oder eine Steuerung erforderlich ist. Damit ist eine zuverlässige Schmierstoffversorgung im Not- oder Trudelbetrieb gewährleistet, insbesondere auch bei einem Energieversorgungsausfall.

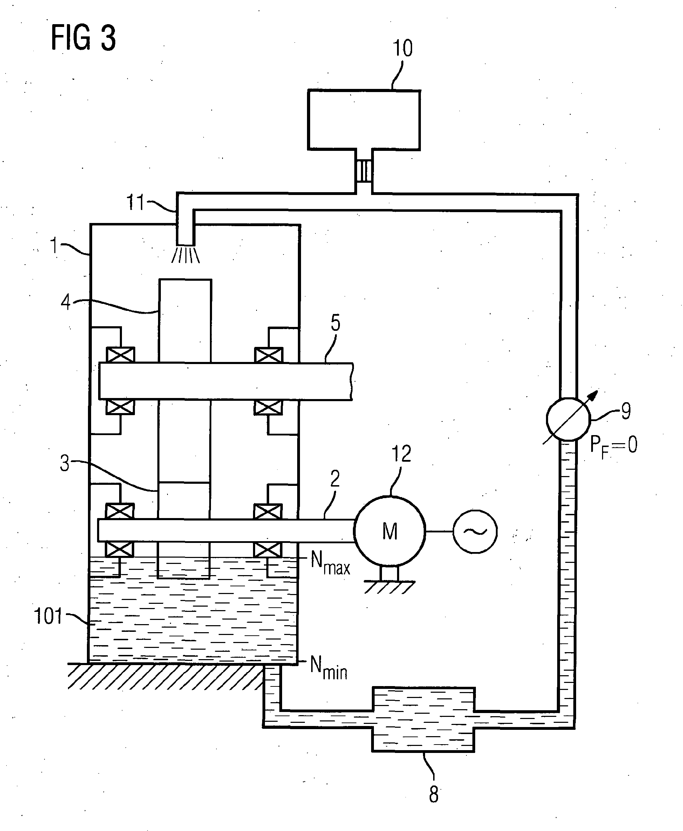

An einen die Schmierstoffauffangwanne, den Schmierstofftank 8, den Schmierstoffausgleichsbehälter 10 und den Schmierstoffzuführungspunkt 11 umfassenden Schmierstoffkreislauf ist auch eine hinsichtlich ihrer Förderleistung regelbare Schmierstoffpumpe 9 angeschlossen. Die Schmierstoffpumpe 9 umfaßt eine integrierte Regelungseinheit zur Füllstandsregelung in der Schmierstoffauffangwanne. Durch die Regelungseinheit wird Schmierstoff 101 in der Schmierstoffauffangwanne auf ein Trockensumpfniveau (siehe Figur 1) für den Normalbetrieb und auf das Tauchschmierungsniveau (siehe Figur 3) für den Not- oder Trudelbetrieb ausgeregelt. Das Trockensumpfniveau in der Schmierstoffauffangwanne befindet sich dabei unterhalb sämtlicher Zahnräder.

Die Füllstandsregelung in der Schmierstoffauffangwanne erfolgt ausschließlich durch eine Förderleistungsregelung der Schmierstoffpumpe. Im Not- oder Trudelbetrieb ist die Schmierstoffpumpe 9 vollständig ausgeschaltet, so daß das antriebsseitige Stirnrad 3 in Schmierstoff 101 in der Schmierstoffauffangwanne eingetaucht ist und Getriebebauteile ausschließlich mittels Tauchschmierung mit Schmierstoff versorgt werden.

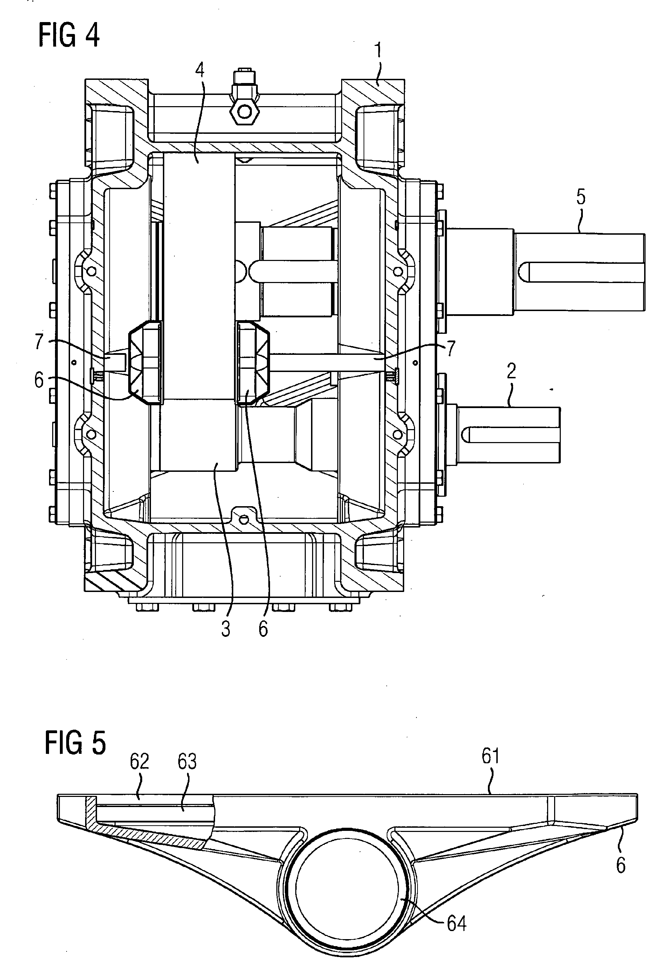

Zur Schmierstoffversorgung des oberhalb der Schmierstoffauffangwanne angeordneten abtriebsseitigen Stirnrads 4 im Not- oder Trudelbetrieb sind entsprechend Figur 4 zwei Schmierstoffauffangbehälter 6 für durch das antriebsseitige Stirnrad 3 aus der Schmierstoffauffangwanne aufgenommenen und durch das abtriebsseitige Stirnrad 4 weitertransportierten Schmierstoff vorgesehen. An beiden Stirnseiten eines abtriebsseitigen Stirnrads 4 ist jeweils ein Schmierstoffauffangbehälter 6 aus Kunststoff angeordnet. Entsprechend der Seitenansicht gemäß Figur 5 umfaßt jeder Schmierstoffauffangbehälter 6 eine obere Öffnung 61 zum Auffangen von einfallendem oder eingespritztem Schmierstoff und einen Bodenabschnitt mit einem stutzenartigen Teil 64 zur Schmierstoffweiterleitung zu einer Schmierungsstelle im Getriebe. An der Öffnung 61 des Schmierstoffauffangbehälters 6 ist ein Schmierstoffabstreifer 62 angeformt, der als zum abtriebsseitigen Stirnrad 4 vorstehende Kante ausgebildet und auf eine äußere radiale Stirnseitenfläche des abtriebsseitigen Stirnrads 4 ausgerichtet ist. Dabei ist die äußere radiale Stirnseitenfläche des abtriebsseitigen Stirnrads 4 geschliffen bzw. poliert.

Der Schmierstoffauffangbehälter 6 weist unterhalb des Schmierstoffabstreifers 62 eine sich parallel zum Schmierstoffabstreifer 62 erstreckende und durch diesen begrenzte schlitzartige Öffnung 63 auf. Der Bodenabschnitt des Schmierstoffauffangbehälters 6 ist mit dem stutzenartigen Teil 64 jeweils an eine Rohrverbindung 7 angeschlossen, über die eine Weiterleitung von gesammeltem Schmierstoff zu weiteren Schmierungsstellen im Getriebe erfolgt, insbesondere zu Lagern der Abtriebswelle 5.

Im Normalbetrieb ist die Schmierstoffpumpe 9 auf volle Förderleistung eingestellt. Schmierstoffdruck- bzw. temperaturbedingt ist der Schmierstoffausgleichsbehälter 10 im Normalbetrieb vollständig mit Schmierstoff 102 gefüllt, so daß der Schmierstoff 101 in der Schmierstoffauffangwanne auf das Trockensumpfniveau absinkt (siehe Figur 1). Der Schmierstoffausgleichsbehälter 10 weist dabei ein Volumen auf, das einer Schmierstoffmenge 101 in der Schmierstoffauffangwanne zur Tauchschmierung entspricht (siehe Figur 3). Mit Schmierstoff zu versorgende Getriebeteile werden im Normalbetrieb über den Schmierstoffzuführungspunkt 11 bzw. weitere nicht explizit dargestellten Spritzdüsen ausschließlich druck- bzw. zwangsgeschmiert. Dies ermöglicht im Vergleich zur Tauchschmierung einen energieeffizienteren Betrieb bzw. eine Wirkungsgradoptimierung.

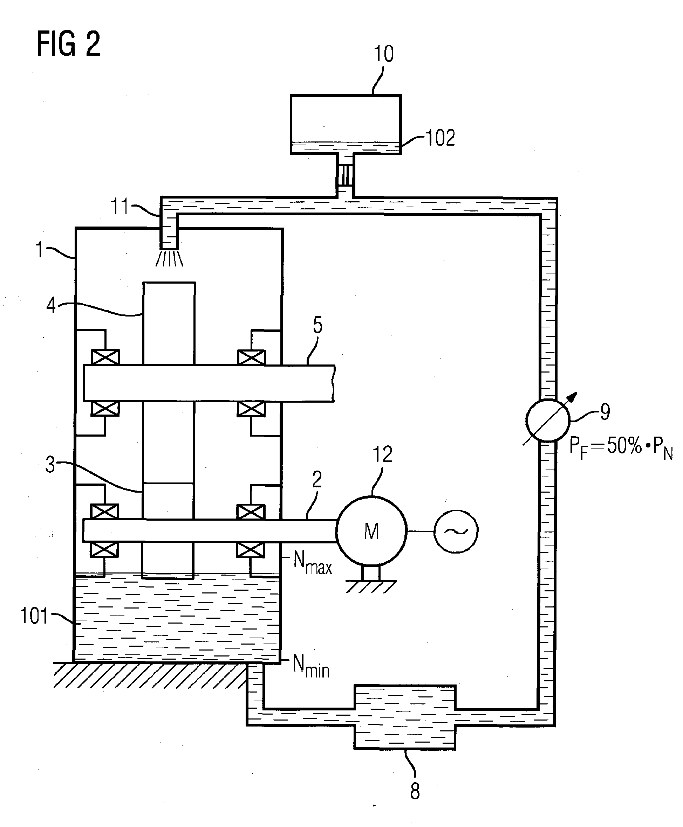

Neben dem Not- oder Trudelbetrieb und dem Normalbetrieb ist ein Teillastbetrieb vorgesehen, während dessen entsprechend Figur 2 für die Füllstandsregelung von Schmierstoff 101 in der Schmierstoffauffangwanne ein Tauchschmierungsniveau vorgegeben ist. Aufgrund einer teilweisen Tauchschmierung im Teillastbetrieb ist keine volle Förderleistung der Schmierstoffpumpe 9 erforderlich, so daß diese im Teillastbetrieb vorteilhafterweise auf eine reduzierte Förderleistung für einen Schmierstofftransport zum Schmierstoffzuführungspunkt 11 eingestellt wird. Dadurch ergeben sich reduzierte Umlaufraten des Schmierstoffs. Damit kann speziell bei Tieftemperaturen und einem Kaltstart eine verminderte Fließfähigkeit des Schmierstoffs kompensiert werden.

Darüber hinaus kann der Schmierstoffausgleichsbehälter 10 im Teillastbetrieb von der Rohrverbindung zwischen Schmierstofftank 8 und Schmierstoffzuführungspunkt 11 mittels eines Stellgliedes oder passiven Schaltelements getrennt werden, so daß der Schmierstoffausgleichsbehälter 10 im Teillastbetrieb kein oder nur eine reduzierte Menge Schmierstoff 102 aufnimmt. Der Teillastbetrieb ist insgesamt also durch eine Kombination zwischen Tauchschmierung und Druck- bzw. Zwangsschmierung andererseits gekennzeichnet. Da tauchschmierungsbedingte quadratisch drehzahlabhängige Planschverluste im Teillastbetrieb durch einen reduzierten Energieverbrauch der Schmierstoffpumpe 9 kompensiert werden können, ergibt sich eine beträchtliche Energieeinsparung im Teillastbetrieb, der weiterhin materialschonend sowohl für den Schmierstoff als auch für die Schmierstoffpumpe 9 ist. Des weiteren kann im Teillastbetrieb aufgrund der reduzierten Umlaufraten des Schmierstoffs auf dessen vollumfängliche Filterung verzichtet werden.

Die Regelungseinheit zur Füllstandsregelung ist vorzugsweise derart ausgestaltet, daß ein Umschalten vom Not- oder Trudelbetrieb in den Teillastbetrieb schmierstofftemperatur- bzw. -viskositätsabhängig erfolgt. Auch ein Umschalten vom Teillastbetrieb in den Normalbetrieb kann schmierstofftemperatur- bzw. -viskositätsabhängig erfolgen.

Bei konventionellen Ölversorgungssystemen sind insbesondere Starts in Trockensumpfanlagen bei Tieftemperaturen äußerst kompliziert, da auch mit Heizung und kontrollierter Betriebsführung ohne weiteres keine vollständige Ölviskositätskontrolle möglich ist. Öl kühlt sich in unbeheizten Getrieben aufgrund dort vorhandener großer Stahlmassen üblicherweise sehr schnell ab. Dies kann dazu führen, daß Öl an kritischen Lagerstellen einfriert und erst gar nicht in einen Sumpfbereich gelangt. Dadurch kann Öl bei unkontrolliertem Pumpenbetrieb durch ein umlaufendes Getriebe nach außen gepreßt werden. Aufgrund einer daraus resultierenden Mangelschmierung können Schäden im Getriebe hervorgerufen werden, insbesondere wenn es zu lokalen Überhitzungen kommt.

Dies kann mit der vorliegenden Erfindung vermieden werden, indem bei Schmierstoff im Getriebe bei einem Anfahren des Getriebes durch zunächst einen Not- oder Trudelbetrieb mit Tauchschmierung und einen anschließenden Teillastbetrieb mit kombinierter Tauch- und Druck- bzw. Zwangsschmierung kontrolliert aufgewärmt wird. Erst bei hinreichender Erwärmung insbesondere des Schmierstoffs wird durch die der Schmierstoffpumpe 9 zugeordnete Regelungseinheit ein Teillast- bzw. Normalbetrieb zugelassen. Ein Übergang vom Teillastbetrieb auf den Normalbetrieb erfolgt einfach durch Erhöhung der Förderleistung der Schmierstoffpumpe 9. Dies führt wiederum zu einer Schmierstoffdruckerhöhung. Dadurch wird Schmierstoff 102 über den Anschluß des Schmierstoffausgleichsbehälters 10 an der Rohrverbindung zwischen Schmierstofftank 8 und Schmierstoffzuführungspunkt 11 in den Schmierstoffausgleichsbehälter 10 eingeleitet. Hieraus resultiert ein Absinken des Schmierstoffs 101 in der Schmierstoffauffangwanne auf ein Trockensumpfniveau. Ist bei einem Anfahren des Getriebes ein schnellerer Übergang in den Teillast- bzw. Normalbetrieb gewünscht, kann im Schmierstoffausgleichsbehälter 10 bzw. im Schmierstofftank 8 ein Wärmetauscher bzw. ein Heizelement angeordnet sein. Dies ist insbesondere bei kompakten Getriebegehäusen mit allenfalls eingeschränktem Platz für einen Wärmetauscher oder ein Heizelement vorteilhaft.

Das in den Figuren dargestellte Getriebe kann entsprechend weiteren Ausgestaltungen zusätzlich Filter, Feinfilter, Überdruckventile, Schaltblöcke, Ölsensoren, Temperatursensoren, Drucksensoren oder andere gängige Bestandteile von Ölversorgungsanlagen umfassen. Außerdem kann der Schmierstofftank 8 als Unterbautank direkt oder mit Ölrücklaufleitung an das Getriebegehäuse 1 angeschlossen sein. Dabei können auch mehrere Ölrücklaufleitungen mit reduziertem Querschnitt vorgesehen sein. Dies bietet insbesondere in Getrieben oder Anlagen mit eingeschränktem Platz Vorteile. Aufgrund einer durch den reduzierten Querschnitt erhöhten Fließgeschwindigkeit bzw. eines erhöhten Drucks kann zudem auf eine Saugpumpe für die Ölrücklaufleitungen verzichtet werden.

Die Anwendung der vorliegenden Erfindung ist nicht auf das beschriebene Ausführungsbeispiel beschränkt.

## Patentansprüche

1. Getriebe für industrielle Anwendungen oder Windkraftanlagen mit
- einer Antriebswelle (2) und einer Abtriebswelle (5), die in einem Getriebegehäuse (1) gelagert sind und jeweils durch eine Gehäuseöffnung treten,
- zumindest einem mit der Antriebswelle (2) verbundenen Zahnrad (3) und zumindest einem mit der Abtriebswelle (5) verbundenen Zahnrad (4), die mittelbar oder unmittelbar im Eingriff miteinander stehen,
- einem Schmierstofftank (8), der einerseits mit einem Ablauf einer an einem Gehäuseboden gebildeten Schmierstoffauffangwanne und andererseits mit zumindest einem Schmierstoffzuführungspunkt(11) für ein Lager und/oder ein Zahnrad verbunden ist,
- einem Schmierstoffausgleichsbehälter (10), der einerseits mit dem Schmierstofftank(8) und andererseits mit dem zumindest einen Schmierstoffzuführungspunkt (11) schmierstoffdruck- und/oder temperaturabhängig verbunden ist,
- einer Schmierstoffpumpe (9), die an einen die Schmierstoffauffangwanne, den Schmierstofftank (8), den Schmierstoffausgleichsbehälter (10) und den zumindest einen Schmierstoffzuführungspunkt (11) umfassenden Schmierstoffkreislauf angeschlossen ist,
- einer der Schmierstoffpumpe (9) zugeordneten Regelungseinheit zur Füllstandsregelung in der Schmierstoffauffangwanne zumindest auf ein Trockensumpfniveau für einen Normalbetrieb und auf ein Tauchschmierungsniveau für einen Not- oder Trudelbetrieb bei ausgeschalteter Schmierstoffpumpe (9), wobei die Schmierstoffpumpe (9) im Not- oder Trudelbetrieb ausgeschaltet ist,
**dadurch gekennzeichnet, dass** für die Füllstandsregelung in der Schmierstoffauffangwanne in einem Teillastbetrieb ein Tauchschmierungsniveau vorgegeben ist, wobei die Schmierstoffpumpe (9) im Teillastbetrieb auf eine reduzierte Förderleistung für einen Schmierstofftransport zum zumindest einen Schmierstoffzuführungspunkt (11) eingestellt ist.

2. Getriebe nach Anspruch 1,
bei dem die Füllstandsregelung in der Schmierstoffauffangwanne ausschließlich durch eine Förderleistungsregelung der Schmierstoffpumpe (9) erfolgt.

3. Getriebe nach einem der Ansprüche 1 oder 2,
bei dem die Schmierstoffpumpe (9) im Normalbetrieb auf volle Förderleistung eingestellt ist.

4. Getriebe nach einem der Ansprüche 1 bis 3,
bei dem zumindest ein Zahnrad bei Not- oder Trudelbetrieb zumindest teilweise in Schmierstoff (101) in der Schmierstoffauffangwanne eingetaucht ist.

5. Getriebe nach einem der Ansprüche 1 bis 4,
bei dem zur Schmierstoffversorgung zumindest eines oberhalb der Schmierstoffauffangwanne angeordneten Lagers und/oder Zahnrads im Not- oder Trudelbetrieb zumindest ein Schmierstoffauffangbehälter (6) für durch zumindest ein umlaufendes Getriebeteil aus der Schmierstoffauffangwanne aufgenommenen Schmierstoff (101) vorgesehen ist.

6. Getriebe nach Anspruch 5,
bei dem der Schmierstoffauffangbehälter (6) über eine Rohrverbindung (7) und/oder einen in das Getriebegehäuse (1) integrierten Schmierstoffversorgungskanal mit einem Schmierstoffzuführungspunkt für das oberhalb der Schmierstoffauffangwanne angeordnete Lager und/oder Zahnrad verbunden ist.

7. Getriebe nach einem der Ansprüche 1 bis 6,
bei dem das Trockensumpfniveau in der Schmierstoffauffangwanne unterhalb sämtlicher Zahnräder ist.

8. Getriebe nach einem der Ansprüche 1 bis 7,
bei dem der Schmierstoffausgleichsbehälter (10) mittels eines Anschlusses, der eine feder- oder stickstoffbelastete Membran umfaßt, mit dem Schmierstofftank (8) und dem zumindest einen Schmierstoffzuführungspunkt (11) verbunden ist.

9. Getriebe nach einem der Ansprüche 1 bis 7,
bei dem der Schmierstoffausgleichsbehälter (10) mittels eines Anschlusses, der eine passive Drossel umfaßt, mit dem Schmierstofftank (8) und mit dem zumindest einen Schmierstoffzuführungspunkt (11) verbunden ist.

10. Getriebe nach einem der Ansprüche 1 bis 9,
bei dem der Schmierstoffausgleichsbehälter (10) im Teillastbetrieb vom Schmierstofftank (8) und vom zumindest einen
Schmierstoffzuführungspunkt (11) mittels eines Stellgliedes oder passiven Schaltelements getrennt ist.

11. Getriebe nach einem der Ansprüche 1 bis 10,
bei dem die Regelungseinheit zur Füllstandsregelung derart ausgestaltet, daß ein Umschalten vom Not- oder Trudelbetrieb in den Teillastbetrieb schmierstofftemperatur- und/oder -viskositätsabhängig erfolgt.

12. Getriebe nach einem der Ansprüche 1 bis 11,
bei dem der Schmierstoffausgleichsbehälter (10) ein Volumen aufweist, das einer Schmierstoffmenge in der Schmierstoffauffangwanne zur Tauchschmierung entspricht.

13. Getriebe nach einem der Ansprüche 1 bis 12,
bei dem der Schmierstoffausgleichsbehälter (10) im Normalbetrieb mit Schmierstoff gefüllt und im Not- oder Trudelbetrieb entleert ist.

14. Getriebe nach einem der Ansprüche 1 bis 13,
bei dem im Schmierstoffausgleichsbehälter (10) und/oder im Schmierstofftank (8) ein Wärmetauscher und/oder ein Heizelement angeordnet sind/ist.

## Claims

1. Gear unit for industrial applications or wind turbines having
- a drive shaft (2) and an output shaft (5) which are mounted in a gear unit housing (1) and which each emerge through a housing opening,
- at least one gear wheel (3) connected to the drive shaft (2) and at least one gear wheel (4) connected to the output shaft (5), which directly or indirectly engage with one another,
- a lubricant tank (8), which on one side is connected to a drain of a lubricant sump formed on a housing base and on the other side to at least one lubricant feed point (11) for a bearing and/or a gear wheel,
- a lubricant reservoir (10), which on one side is connected to the lubricant tank (8) and on the other side to the at least one lubricant feed point (11) as a function of lubricant pressure and/or temperature,
- a lubricant pump (9), which is connected to a lubricant circuit comprising the lubricant sump, the lubricant tank (8), the lubricant reservoir (10) and the at least one lubricant feed point (11),
- a control unit associated with the lubricant pump (9) for adjusting the level in the lubricant sump at least to a dry sump level for normal operation and to a splash lubrication level for emergency or spinning operation when the lubricant pump (9) is switched off, the lubricant pump (9) being switched off in emergency or spinning operation,
**characterised in that** a splash lubrication level is defined for adjusting the level in the lubricant sump in part-load operation, the lubricant pump (9) being set in part-load operation to a reduced delivery rate for transporting lubricant to at least one lubricant feed point (11).

2. Gear unit according to claim 1,
wherein level control in the lubricant sump is effected exclusively by adjusting the delivery rate of the lubricant pump (9).

3. Gear unit according to one of claims 1 or 2,
wherein the lubricant pump (9) is set to full delivery rate in normal operation.

4. Gear unit according to one of claims 1 to 3,
wherein at least one gear wheel is immersed at least partially in lubricant (101) in the lubricant sump in emergency or spinning operation.

5. Gear unit according to one of claims 1 to 4,
wherein at least one lubricant collection container (6) is provided for lubricant (101) collected by at least one rotating gear unit component from the lubricant sump for supplying lubricant to at least one bearing and/or gear wheel arranged above the lubricant sump in emergency or spinning operation.

6. Gear unit according to claim 5,
wherein the lubricant collection container (6) is connected to a lubricant feed point for the bearing and/or gear wheel arranged above the lubricant sump via a pipe connection (7) and/or a lubricant supply channel integrated into the gear unit housing (1).

7. Gear unit according to one of claims 1 to 6,
wherein the dry sump level in the lubricant sump is below all gear wheels.

8. Gear unit according to one of claims 1 to 7,
wherein the lubricant reservoir (10) is connected to the lubricant tank (8) and the at least one lubricant feed point (11) by a connector which comprises a spring-loaded or nitrogen-loaded membrane.

9. Gear unit according to one of claims 1 to 7,
wherein the lubricant reservoir (10) is connected to the lubricant tank (8) and to the at least one lubricant feed point (11) by a connector which comprises a passive restrictor.

10. Gear unit according to one of claims 1 to 9,
wherein the lubricant reservoir (10) is separated in part-load operation from the lubricant tank (8) and from the at least one lubricant feed point (11) by an actuating element or passive switch element.

11. Gear unit according to one of claims 1 to 10,
wherein the control unit for adjusting the level is designed such that a switch is effected from emergency or spinning operation to part-load operation as a function of lubricant temperature and/or viscosity.

12. Gear unit according to one of claims 1 to 11,
wherein the lubricant reservoir (10) has a volume corresponding to an amount of lubricant in the lubricant sump for splash lubrication.

13. Gear unit according to one of claims 1 to 12,
wherein the lubricant reservoir (10) is filled with lubricant in normal operation and is drained in emergency or spinning operation.

14. Gear unit according to one of claims 1 to 13,
wherein a heat exchanger and/or a heating element are/is arranged in the lubricant reservoir (10) and/or in the lubricant tank (8).

## Revendications

1. Engrenage pour des applications industrielles ou pour des éoliennes comprenant
- un arbre ( 2 ) menant et un arbre ( 5 ) mené, qui sont montés dans un carter ( 1 ) d'engrenage et qui passent respectivement par une ouverture du carter,
- au moins une roue ( 3 ) dentée reliée à l'arbre ( 2 ) menant et au moins une roue ( 4 ) dentée reliée à l'arbre ( 5 ) mené, qui sont en prise l'une avec l'autre indirectement ou directement,
- un réservoir ( 8 ) de lubrifiant, qui communique d'une part avec une évacuation d'une cuve de réception de lubrifiant formée au fond du carter et d'autre part avec au moins un point ( 11 ) d'apport de lubrifiant à un palier et/ou une roue dentée,
- un ballon ( 10 ) de compensation de lubrifiant, qui communique, en fonction de la pression du lubrifiant et/ou de la température, d'une part avec la cuve ( 8 ) de lubrifiant et d'autre part avec le au moins un point ( 11 ) d'apport de lubrifiant,
- une pompe ( 9 ) à lubrifiant, qui est raccordée à un circuit de lubrifiant comprenant la cuve de réception de lubrifiant, le réservoir ( 8 ) de lubrifiant, le ballon ( 10 ) de compensation de lubrifiant et le au moins un point ( 11 ) d'apport de lubrifiant,
- une unité de régulation associée à la pompe ( 9 ) à lubrifiant et destinée à réguler le niveau dans la cuve de réception de lubrifiant au moins à un niveau à sec, pour un fonctionnement normal, et à un niveau de graissage par lubrification, pour un fonctionnement de secours ou en vrille, lorsque la pompe ( 9 ) à lubrifiant est mise hors circuit, la pompe ( 9 ) à lubrifiant étant mise hors circuit dans le fonctionnement de secours ou en vrille,
**caractérisé en ce qu'**il est prévu, pour la régulation du niveau dans la cuve de réception de lubrifiant, dans un fonctionnement en charge partielle, à un niveau de graissage par lubrification, la pompe ( 9 ) à lubrifiant étant, dans le fonctionnement en charge partielle, réglée à une puissance utile, réduite, pour transporter du lubrifiant au au moins un point ( 11 ) d'apport de lubrifiant.

2. Engrenage suivant la revendication 1,
dans lequel la régulation du niveau dans la cuve de réception de lubrifiant s'effectue exclusivement par une régulation de la puissance utile de la pompe ( 9 ) à lubrifiant.

3. Engrenage suivant l'une des revendications 1 ou 2,
dans lequel la pompe ( 9 ) à lubrifiant est réglée en fonctionnement normal à la pleine puissance utile.

4. Engrenage suivant l'une des revendications 1 à 3,
dans lequel au moins une roue dentée est plongée, dans le fonctionnement de secours ou en vrille, au moins en partie dans le lubrifiant ( 101 ) de la cuve de réception de lubrifiant.

5. Engrenage suivant l'une des revendications 1 à 4,
dans lequel il est prévu, pour l'alimentation en lubrifiant d'au moins un palier et/ou d'une roue dentée disposée au dessus de la cuve de réception de lubrifiant, dans le fonctionnement de secours ou en vrille, au moins un récipient ( 6 ) de réception de lubrifiant, pour du lubrifiant ( 101 ), pris de la cuve de réception de lubrifiant, par au moins une partie tournante de l'engrenage.

6. Engrenage suivant la revendication 5,
dans lequel le récipient ( 6 ) de réception de lubrifiant communique, par une canalisation ( 7 ) et/ou par un canal d'alimentation à lubrifiant intégré au carter ( 1 ) de l'engrenage, avec un point d'apport de lubrifiant au palier et/ou à la roue dentée disposée au dessus de la cuve de réception de lubrifiant.

7. Engrenage suivant l'une des revendications 1 à 6,
dans lequel le niveau à sec dans la cuve de réception de lubrifiant est en dessous de toutes les roues dentées.

8. Engrenage suivant l'une des revendications 1 à 7,
dans lequel le ballon ( 10 ) de compensation de lubrifiant communique au moyen d'un raccord, qui comprend une membrane soumise à l'action d'un ressort ou de l'azote, avec le réservoir ( 8 ) de lubrifiant et avec le au moins un point ( 11 ) d'apport de lubrifiant.

9. Engrenage suivant l'une des revendications 1 à 7,
dans lequel le ballon ( 10 ) de compensation de lubrifiant communique au moyen d'un raccord, qui comprend un étranglement passif, avec le réservoir ( 8 ) de lubrifiant et avec le au moins un point ( 11 ) d'apport de lubrifiant.

10. Engrenage suivant l'une des revendications 1 à 9,
dans lequel le ballon ( 10 ) de compensation de lubrifiant est, en fonctionnement en charge partielle, séparé du réservoir ( 8 ) de lubrifiant et du au moins un point ( 11 ) d'apport de lubrifiant, au moyen d'un actionneur ou d'un élément de commutation passif.

11. Engrenage suivant l'une des revendications 1 à 10,
dans lequel l'unité de régulation est, pour la régulation du niveau, réglée de manière à ce que s'effectue, en fonction de la température du lubrifiant et/ou de sa viscosité, un passage du fonctionnement de secours ou en vrille au fonctionnement en charge partielle.

12. Engrenage suivant l'une des revendications 1 à 11,
dans lequel le ballon ( 10 ) de compensation de lubrifiant a un volume, qui correspond à une quantité de lubrifiant dans la cuve de réception de lubrifiant pour la lubrification par barbotage.

13. Engrenage suivant l'une des revendications 1 à 12,
dans lequel le ballon ( 10 ) de compensation de lubrifiant est rempli de lubrifiant en fonctionnement normal et est vidé dans le fonctionnement de secours ou en vrille.

14. Engrenage suivant l'une des revendications 1 à 13,
dans lequel dans le ballon ( 10 ) de compensation de lubrifiant et/ou dans le réservoir ( 8 ) de lubrifiant sont /est monté ( s ) un échangeur de chaleur et/ou un élément de chauffage.
